# EUROPÄISCHE PATENTSCHRIFT

(11) **EP 0 899 001 B1**
(45) Veröffentlichungstag und Bekanntmachung des Hinweises auf die Patenterteilung: **24.09.2003**
(21) Anmeldenummer: 97114906.7
(22) Anmeldetag: 28.08.1997
(51) Int. Cl.: B01D 53/79

(54) **Verfahren zur Einrichtung einer Düsenanordnung in einem Waschturm**
Process for the installation of an arrangement of spray nozzles in a scrubber
Procédé pour l'installation d'un arrangement de buses de pulvérisation dans une tour de lavage

(43) Veröffentlichungstag der Anmeldung: 03.03.1999
(73) Patentinhaber: Lurgi Energie und Entsorgung GmbH, 40880 Ratingen (DE)
(72) Erfinder: Risse, Theo, Dipl.-Phys., 59368 Werne (DE)
(74) Vertreter: Albrecht, Rainer Harald, Dr.-Ing.

(56) Entgegenhaltungen:
- EP-A- 0 524 729
- GB-A- 2 297 705

## Beschreibung

Die Erfindung betrifft eine Düsenanordnung für einen Waschturm, der einen Waschflüssigkeitssumpf, eine einbautenfreie Absorptionszone und mindestens eine Düsenebene oberhalb der Absorptionszone aufweist, mit Verteiler, Abzweigleitungen und Düsen, deren Sprühkegel sich überlappen, wobei die Düsen mit seitlich abgehenden Zwischenstücken an die Abzweigleitungen angeschlossen sind. Der zu reinigende Gasstrom wird im Gleich- oder Gegenstrom zur Waschflüssigkeit durch die Absorptionszone geführt. Bevorzugt ist eine Gegenstromführung, wobei der Gasstrom von unten nach oben durch die Absorptionszone geführt wird und den Waschturm oberhalb der Düsenebenen verlässt. Die Erfindung bezieht sich insbesondere auf die Düsenanordnung eines Waschturms, der zur Rauchgasentschwefelung eingesetzt wird und einen Durchmesser von mehreren Metern aufweist.

Die Düsenanordnung, von der die Erfindung ausgeht, umfasst eine oder mehrere Düsenebenen mit jeweils einem Verteiler, der in einer Symmetrieachse des Waschturmquerschnitts angeordnet ist und sich über den gesamten Querschnitt des Waschturms erstreckt. Rechts und links schließen in äquidistanten Abständen die Abzweigleitungen an, an die in einer ebenfalls symmetrischen Verteilung Zwischenstücke mit endseitigen, nach unten sprühende Düsen angeordnet sind (GB-A-2 297 705). Die Düsenverteilung wird so eingerichtet, dass die Sprühkegel der Düsen sich überlappen und der Waschturmquerschnitt möglichst gleichmäßig mit Düsen belegt ist. Angestrebt wird eine möglichst gleichmäßige Flächenbelegung nach geometrischen Gesichtspunkten.

Bei Konzentrationsmessungen im gewaschenen Gasstrom oberhalb der Düsenebenen sind, trotz gleichmäßiger Flächenbelegung des Waschturmquerschnitts mit Düsen, örtlich hohe Schadgaskonzentrationen festgestellt worden. Der gewaschene Gasstrom enthält Strähnen, die in der Absorptionszone nicht ausreichend mit Waschflüssigkeit in Kontakt gekommen sind. Die im Gasstrom verbleibenden Schadgassträhnen verschlechtern den Absorptionswirkungsgrad. Wird ein vorgegebener Absorptionswirkungsgrad nicht erreicht, muss die Länge der Absorptionszone vergrößert und/oder müssen weitere Düsenebenen mit Düsen eingebaut sowie die Waschflüssigkeitsmenge entsprechend erhöht werden. Das ist aufwendig und mit zusätzlichen Betriebskosten für die höhere Pumpenleistung verbunden. Eine Umrüstung vorhandener Waschtürme ist in vielen Fällen kaum möglich.

Der Erfindung liegt die Aufgabe zugrunde, ein Verfahren anzugeben, um eine Düsenanordnung für einen Waschturm festzulegen, die sicherstellt, dass der zu reinigende Gasstrom gleichmäßig gewaschen wird und Schadgassträhnen in dem gewaschenen Gasstrom nicht mehr auftreten.

Gegenstand der Erfindung und Lösung dieser Aufgabe ist ein Verfahren zur Einrichtung einer aus Verteiler, Abzweigleitungen und Düsen bestehenden Düsenanordnung in einem Waschturm, der einen Waschflüssigkeitssumpf, eine einbautenfreie Absorptionszone und mindestens eine Düsenebene oberhalb der Absorptionszone aufweist, wobei die Düsen mit seitlich abgehenden Zwischenstücken an die Abzweigleitungen angeschlossen werden und wobei
**a)** für die Sprühkegel der Düsen in vorgegebenen Querschnittsebenen der Absorptionszone Flussdichteprofile (FD3, FD3') erstellt werden,
**b)** für jede Querschnittsebene (Q₁, Q₂, ...) die den Sprühkegeln zugeordneten Flussdichteprofile (FD3, FD3') überlagert werden,
**c)** die für die Querschnittsebene (Q₁, Q₂, ...) erstellten Flussdichteverteilungen (FDV1, FDV2, ...) auf eine Ebene projiziert und zu einem die Waschflüssigkeitsverteilung der Absorptionszone charakterisierenden Flussdichtegesamtprofil (FDGP) überlagert werden,
**d)** das Flussdichtegesamtprofil mit einem Vorgabewert verglichen wird und
**e)** bei Abweichungen von dem Vorgabewert die Position einer oder mehrerer Düsen durch Längen- oder Positionsänderung der zugeordneten Zwischenstücke verändert und die Schritte a) bis d) so lange wiederholt werden, bis das für den Waschturmquerschnitt erstellte Flussdichtegesamtprofil (FDGP) bis zu einem wandnahen Bereich des Waschturms einen annähernd konstanten Wert besitzt.

Die Erfindung beruht auf der Erkenntnis, dass die Ausbreitung der Sprühkegel keine geeignete Bezugsgröße darstellt, um die Düsenverteilung festzulegen, dass vielmehr die Flussdichte als geeignete Bezugsgröße heranzuziehen ist. Flussdichte meint den aus einer Düse austretenden Volumenstrom, bezogen auf die von dem Sprühkegel überstrichene Fläche. In Düsenaustrittsnähe ist die Flussdichte, also die Zahl der Tropfen bezogen auf die Strahlfläche, groß. Sie nimmt mit der Ausbreitung des Sprühkegels, also mit zunehmendem Abstand zur Düse, ab.

Die Erfindung beruht auf folgendem Modell. Die Absorptionszone des Waschturms besteht aus N Volumenelementen, die sich vom Waschflüssigkeitssumpf bis zur ersten Düsenebene erstrecken und in Längsrichtung von Gas durchströmt werden. Enthält jedes dieser N Volumenelemente im statistischen Mittel eine gleiche Anzahl von Flüssigkeitstropfen, so ist eine gleichmäßige Auswaschung des Gases sichergestellt und ergibt sich am Austritt des Waschturms eine gleichmäßige Konzentrationsverteilung im Gasstrom. Die Schritte a) bis e) lehren ein methodisches Vorgehen, um die Modellvorstellung umzusetzen. Es versteht sich, dass in einer Wandzone nahe des Behältermantels des Waschturms die praktische Umsetzung nicht in vollem Umfange gelingt und eine geringere Flussdichte in Kauf genommen werden muss, weil die wandnahen Düsen so positioniert werden, dass eine übermäßige Flüssigkeitsbenetzung am Behältermantel nicht auftritt.

Gemäß einer bevorzugten Ausführung der Erfindung wird der Verteiler in einer Symmetrieachse des Waschturmquerschnitts angeordnet und werden die Düsen in einer beiderseits des Verteilers identischen Verteilung spiegelbildlich zur Symmetrieachse angeordnet. Betrachtet man jede Hälfte des Waschturmquerschnitts für sich, ist eine weitergehende Symmetrie in Bezug auf die Anordnung der Düsen nicht erkennbar, wenn man nach der erfindungsgemäßen Lehre arbeitet.

Bei der erfindungsgemäßen Einrichtung der Düsenverteilung bildet das die Waschflüssigkeitsverteilung in der Absorptionszone charakterisierende Flussdichtegesamtprofil (ermittelt nach den Schritten a) bis d)) in der Draufsicht eine geschlossene Kernfläche aus im Wesentlichen konstanten Flussdichtewerten. An diese Kernfläche schließt eine Ringfläche aus nach außen abnehmenden Flussdichtewerten an.

Die Düsenanordnung kann Düsen aus nach unten sprühenden Hohlkegeldüsen oder Vollkegeldüsen aufweisen. Es können ferner in an sich bekannter Weise mehrere Düsenebenen übereinander angeordnet werden.

Im Folgenden wird die Erfindung anhand einer lediglich ein Ausführungsbeispiel darstellenden Zeichnung erläutert. Es zeigen schematisch
- **Fig. 1**: zwei in unterschiedlichen Düsenebenen angeordnete Düsen mit austretenden, sich überlappenden Sprühkegeln,
- **Fig. 2**: Flussdichteprofile von sich überlappenden Sprühkegeln in verschiedenen Querschnittsebenen des Waschturms,
- **Fig. 3**: die Düsenanordnung in einem Waschturm mit einer erfindungsgemäß eingerichteten Düsenverteilung,
- **Fig. 4**: das Flussdichtegesamtprofil der in Fig. 3 dargestellten Düsenanordnung, und zwar nach Überlagerung der in verschiedenen Ebenen des Waschturms erstellten Flussdichteverteilungen,
- **Fig. 5**: zum Vergleich eine Düsenanordnung nach dem Stand der Technik,
- **Fig. 6**: zum Vergleich eine Darstellung entsprechend Fig. 4, jedoch für die in Fig. 5 dargestellte Düsenanordnung nach dem Stand der Technik.

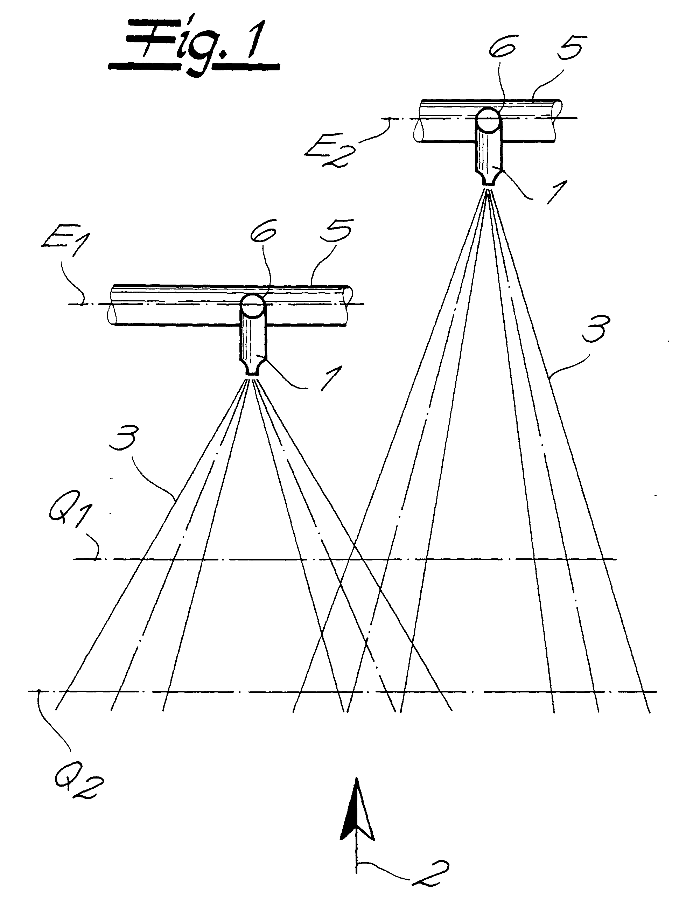

Die in Fig. 1 dargestellten Düsen 1 sind Teil einer Düsenanordnung für einen Waschturm zur Rauchgasentschwefelung, der einen Waschflüssigkeitssumpf, eine einbautenfreie Absorptionszone und mehrere Düsenebenen E₁, E₂, ... oberhalb der Absorptionszone aufweist. Zu reinigendes Rauchgas 2 durchströmt die Absorptionszone im Gegenstrom zu den Sprühstrahlen der Düsen von unten nach oben. Die Düsenanordnung weist eine große Zahl von Düsen 1 auf, deren Sprühkegel 3 sich in der in Fig. 1 angedeuteten Weise überlappen.

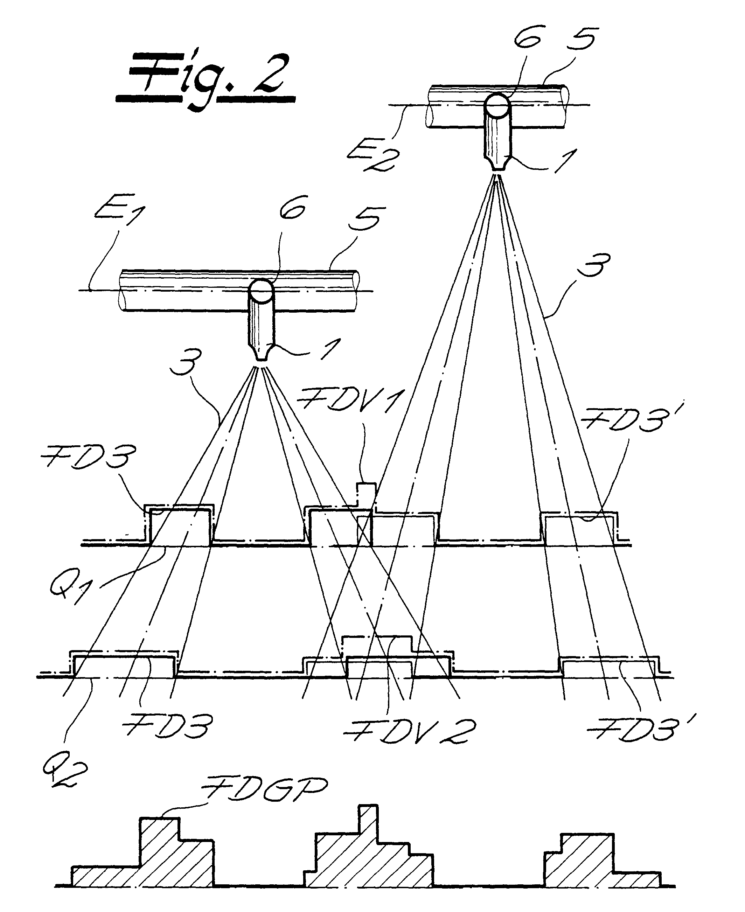

Die Vorgehensweise bei der Festlegung der Düsenverteilung wird anhand der Fig. 2 verständlich. Für die Sprühkegel 3 der Düsen 1 werden in vorgegebenen Querschnittsebenen Q₁, Q₂, ... der Absorptionszone Flussdichteprofile FD3, FD3' erstellt. Für jede Querschnittsebene, Q₁, Q₂, ... werden die den Sprühkegeln 3 zugeordneten Flussdichteprofile FD3, FD3' überlagert. Es resultieren Flussdichteverteilungen FDV1, FDV2, ... die jeweils für eine Querschnittsebene der Absorptionszone charakteristisch sind. Die erstellten Flussdichteverteilungen FDV1, FDV2, ... werden auf eine Ebene projiziert und dabei zu einem die Waschflüssigkeitsverteilung der Absorptionszone charakterisierenden Gesamtprofil FDGP überlagert. Das Flussdichtegesamtprofil FDGP wird mit einem Vorgabewert verglichen. Bei Abweichungen von dem Vorgabewert wird die Position einer oder mehrerer Düsen 3 verändert. Die beschriebenen Schritte werden so lange wiederholt, bis das für den Waschturmquerschnitt erstellte Flussdichtegesamtprofil FDGP einen annähernd konstanten Wert besitzt. Abweichungen in einem wandnahen Bereich des Waschturms müssen zugelassen werden. Hier ist eine geringere Flussdichte in Kauf zu nehmen, um eine übermäßige Benetzung der Waschturmwand zu vermeiden.

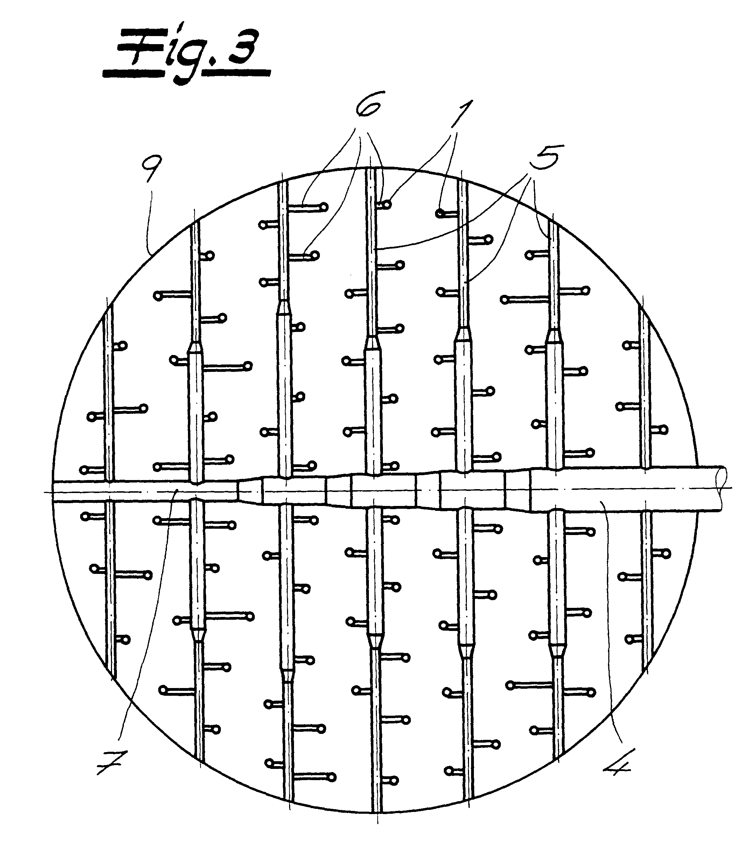

Die erfindungsgemäße Methodik führt zu einer Düsenverteilung, die in Fig. 3 für eine Düsenebene dargestellt ist. Die Düsenanordnung weist einen in einer Symmetrieachse des Waschturmquerschnitts angeordneten Verteiler 4 auf, an den rechts und links Abzweigleitungen 5 anschließen. Die Düsen 1 sind mit seitlich abgehenden Zwischenstücken 6 an die Abzweigleitungen 5 angeschlossen. Die Länge und Position der Zwischenstücke 6 sind so gewählt, dass sich eine Düsenverteilung ergibt, die nach der vorstehend erläuterten Methode festgelegt wurde. Zweckmäßig und ohne funktionsmäßige Beeinträchtigung kann die Düsenanordnung in Bezug auf die durch den Verteiler 4 vorgegebene Symmetrieachse 7 spiegelbildlich ausgebildet sein. Der Fig. 3 entnimmt man, dass die Düsen 1 in einer beiderseits des Verteilers 4 identischen Verteilung spiegelbildlich zur Symmetrieachse 7 angeordnet sind. Innerhalb einer Hälfte des Waschturmquerschnitts sind jedoch keine Symmetrien erkennbar.

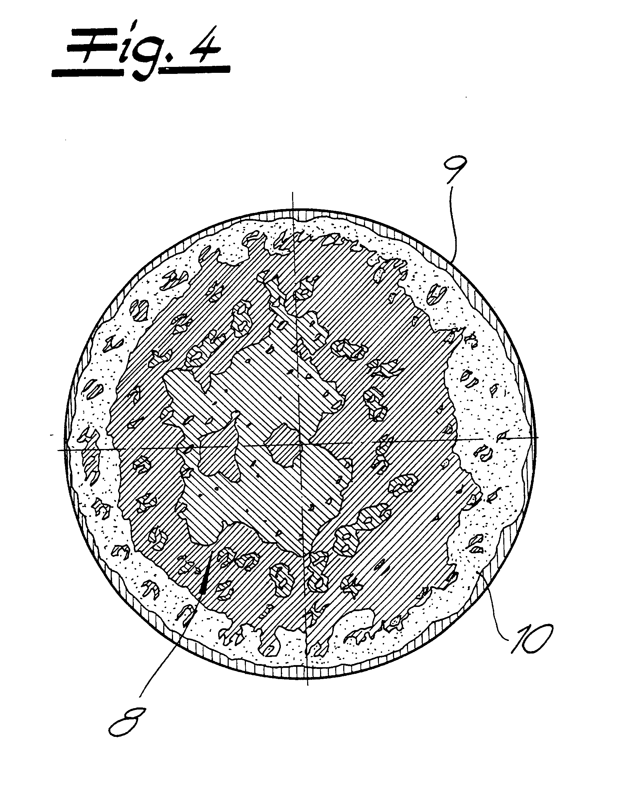

Bei der in Fig. 3 dargestellten erfindungsgemäßen Düsenanordnung stellt sich eine Flussdichtegesamtverteilung gem. Fig. 4 ein. Die Fig. 4 zeigt das die Waschflüssigkeitsverteilung in der Absorptionszone charakterisierende Flussdichtegesamtprofil FDGP in der Draufsicht. Es weist eine geschlossene Kernfläche 8 aus im Wesentlichen konstanten Flussdichtewerten auf. In Wandnähe des Behältermantels 9 schließt an die Kernfläche 8 eine Ringfläche 10 aus nach außen abnehmenden Flussdichtewerten an.

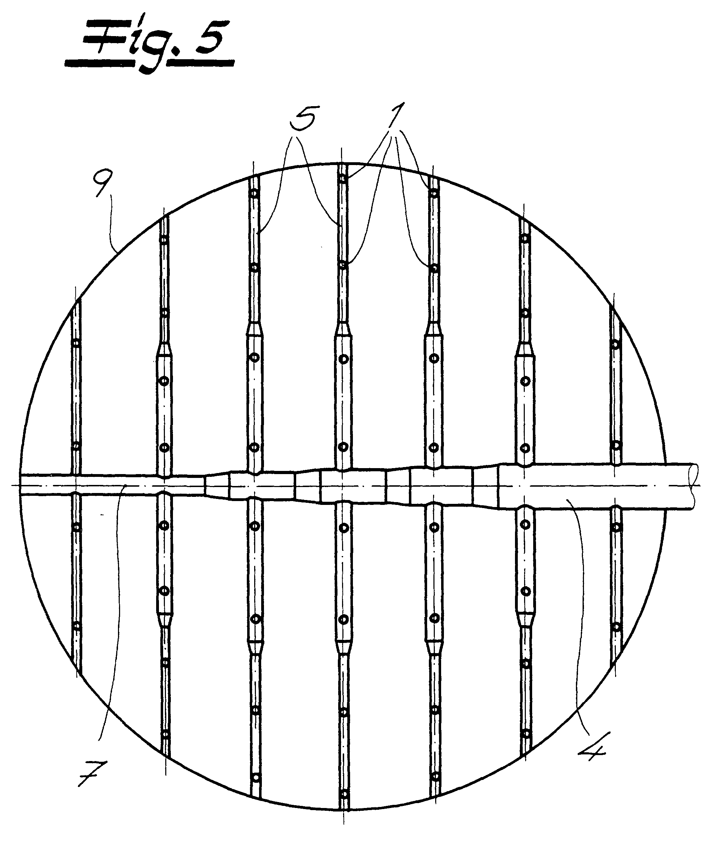

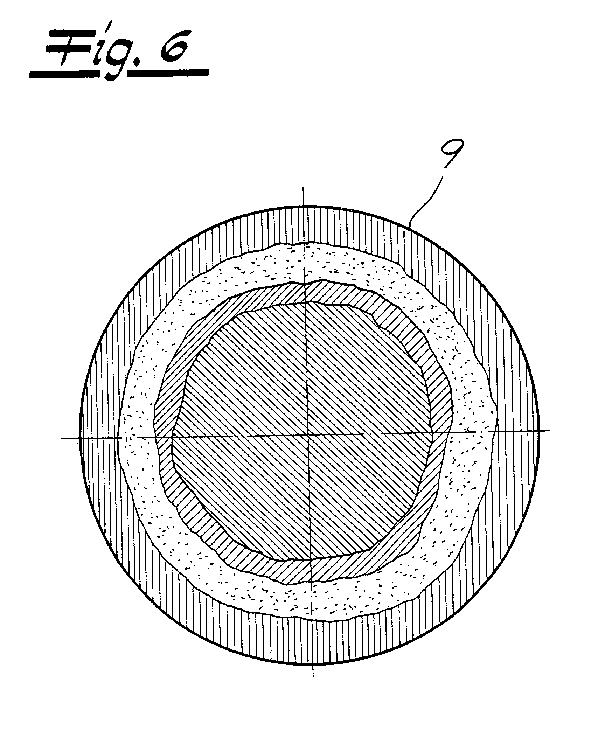

In Fig. 5 ist zum Vergleich eine Düsenanordnung nach dem Stand der Technik dargestellt. Die Düsen 1 sind hier mit äquidistanten Abständen an den Abzweigleitungen 5 oder unter Zwischenschaltung kurzer Düsenstöcke in unmittelbarer Nähe an die Abzweigleitungen 5 angeschlossen. Es resultiert eine durch geometrische Symmetrien geprägte Anordnung. Das nach der beschriebenen Methode ausgewertete Flussdichtegesamtprofil FDGP ist gekennzeichnet durch die in Fig. 6 dargestellte Verteilung. Man erkennt, dass über den gesamten Querschnitt des Waschturms verteilt Bereiche hoher Flussdichte und niedriger Flussdichte unmittelbar nebeneinander vorhanden sind. In den Zonen geringer Flussdichte ist die Auswaschung der Schadstoffkomponenten aus dem Gas unvollständig. Das den Waschturm verlassende Gas hat Strähnen mit hohen Schadstoffkonzentrationen.

Die nach dem erfindungsgemäßen Verfahren eingerichtete Düsenanordnung ermöglicht eine optimale Ausnutzung der für die Gaswäsche zur Verfügung stehenden Flüssigkeit. Strähnen mit hoher Schadgaskonzentration treten in dem den Waschturm verlassenden gewaschenen Gas nicht mehr auf. Es resultiert ein insgesamt wesentlich verbesserter Absorptionswirkungsgrad.

## Patentansprüche

1. Verfahren zur Einrichtung einer aus Verteiler (4), Abzweigleitungen (5) und Düsen (1) bestehenden Düsenanordnung in einem Waschturm, der einen Waschflüssigkeitssumpf, eine einbautenfreie Absorptionszone und mindestens eine Düsenebene oberhalb der Absorptionszone aufweist, wobei die Düsen (1) mit seitlich abgehenden Zwischenstücken (6) an die Abzweigleitungen (5) angeschlossen werden und wobei
**a)** für die Sprühkegel (3) der Düsen (1) in vorgegebenen Querschnittsebenen der Absorptionszone Flussdichteprofile (FD3, FD3') erstellt werden,
**b)** für jede Querschnittsebene (Q₁, Q₂, ...) die den Sprühkegeln (3) zugeordneten Flussdichteprofile (FD3, FD3') überlagert werden,
**c)** die für die Querschnittsebene (Q₁, Q₂, ...) erstellten Flussdichteverteilungen (FDV1, FDV2, ...) auf eine Ebene projiziert und zu einem die Waschflüssigkeitsverteilung der Absorptionszone charakterisierenden Flussdichtegesamtprofil (FDGP) überlagert werden,
**d)** das Flussdichtegesamtprofil mit einem Vorgabewert verglichen wird und
**e)** bei Abweichungen von dem Vorgabewert die Position einer oder mehrerer Düsen (1) durch Längen- oder Positionsänderung der zugeordneten Zwischenstücke (6) verändert und die Schritte a) bis d) so lange wiederholt werden, bis das für den Waschturmquerschnitt erstellte Flussdichtegesamtprofil (FDGP) bis zu einem wandnahen Bereich des Waschturms einen annähernd konstanten Wert besitzt.

2. Verfahren nach Anspruch 1, **dadurch gekennzeichnet, dass** der Verteiler (4) in einer Symmetrieachse (7) des Waschturmquerschnittes angeordnet wird und dass die Düsen (1) in einer beidseits des Verteilers (4) identischen Verteilung spiegelbildlich um die Symmetrieachse (7) angeordnet werden.

3. Verfahren nach Anspruch 1 oder 2, **dadurch gekennzeichnet, dass** als Düsen (1) nach unten sprühende Hohlkegeldüsen oder Vollkegeldüsen verwendet werden.

## Claims

1. A method of installing a nozzle arrangement consisting of distributors (4), branch lines (5) and nozzles (1) in a scrubbing tower, which comprises a scrubbing liquid sump, an absorption zone without internal baffles and at least one nozzle level above the absorption zone, whereby the nozzles (1) are connected to the branch lines (5) with adaptor pieces (6) which branch off at the side, and whereby
a) flow density profiles (FD3, FD3') are created for the spray cones (3) of the nozzles (1) in predetermined cross-sectional levels of the absorption zone;
b) for each cross-sectional level (Q₁, Q₂, ...), the flow density profiles (FD3, FD3') assigned to the spray cones (3) are superimposed;
c) the flow density distributions (FDV1, FDV2, ...) created for the cross-sectional level (Q₁, Q₂, ...) are projected onto a plane and are superimposed to yield an overall flow density profile (FDGP) which is characteristic of the washing fluid distribution of the absorption zone;
d) the overall flow density profile is compared with a setpoint value, and
e) if there are any deviations from the setpoint value, the position of one or more nozzles (1) is altered by changing the length or position of the respective adaptor pieces (6), and steps a) through d) are repeated until the overall flow density profile (FDGP) created for the scrubbing tower cross section has an approximately constant value up to an area near the wall of the scrubbing tower.

2. The method according to Claim 1, **characterized in that** the distributor (4) is arranged in an axis of symmetry (7) of the scrubbing tower cross section, and the nozzles (1) are arranged in mirror image around the axis of symmetry (7) in an identical distribution on both sides of the distributor (4).

3. The method according to Claim 1 or 2, **characterized in that** hollow-cone nozzles or solid-cone nozzles which spray downward are used as the nozzles (1).

## Revendications

1. Procédé d'installation d'un agencement à tuyères consistant en un distributeur (4), en des conduites de dérivation (5) et en tuyères (1) dans une tour de lavage qui présente un puisard de liquide de lavage, une zone d'absorption dépourvue de pièces intégrées et au moins un plan de tuyères au dessus de la zone d'absorption, les tuyères (1) étant raccordées aux conduites de dérivation (5) par des pièces intermédiaires (6) à distribution latérale et
a) des profils de densité de flux (FD3, PD3') étant établis pour les cônes d'aspersion (3) des tuyères (1) dans des plans de section transversale prédéfinis de la zone d'absorption,
b) les profils de densité de flux (FD3, FD3') associés aux cônes d'aspersion (3) étant superposés pour chaque plan de section transversale (Q₁, Q₂, ...),
c) les répartitions de densité de flux (FDV1, FDV2, ...) établies pour le plan de section transversale (Q₁, Q₂, ...) étant projetées sur un plan et superposées pour former un profil global de densité de flux (FDGP) caractérisant la répartition du liquide de lavage de la zone d'absorption,
d) le profil global de densité de flux étant comparé à une valeur de référence et
e) en cas d'écarts par rapport à la valeur de référence, la position d'une ou plusieurs tuyères (1) étant modifiée par changement de longueur ou de position des pièces intermédiaires associées (6) et les étapes a) à d) étant répétées jusqu'à ce que le profil global de densité de flux (FDGP) établi pour la section transversale de la tour de lavage possède, jusqu'à une zone proche de la paroi de la tour de lavage, une valeur approximativement constante.

2. Procédé selon la revendication 1, **caractérisé en ce que** le distributeur (4) est disposé dans un axe de symétrie (7) de la section transversale de la tour de lavage et que les tuyères (1) sont disposées avec une répartition identique des deux côtés du distributeur (4) et en symétrie miroir autour de l'axe de symétrie (7).

3. Procédé selon la revendication 1 ou 2, **caractérisé en ce qu'**on utilise comme tuyères (1) des tuyères à cône creux ou des tuyères à cône plein aspergeant vers le bas.
